## Europäisches Patentamt
## European Patent Office
## Office européen des brevets

(11) Veröffentlichungsnummer: **0 152 107**
**A2**

(12) **EUROPÄISCHE PATENTANMELDUNG**

(21) Anmeldenummer: **85101556.0**

(22) Anmeldetag: **13.02.85**

(51) Int. Cl.⁴: **B 29 B 11/10**
B 29 B 7/82, B 29 B 7/88
B29K105:06

(30) Priorität: **14.02.84 DE 3405185**

(43) Veröffentlichungstag der Anmeldung·
**21.08.85** Patentblatt **85/34**

(84) Benannte Vertragsstaaten.
**DE FR GB IT**

(71) Anmelder: **Plüss-Staufer AG**
**CH-4665 Oftringen(CH)**

(72) Erfinder: **Schlumpf, Hans-Peter, Dr. Dipl.-Ing.**
**Bergliweg 8**
**CH-4665 Oftringen(CH)**

(72) Erfinder: **Pfister, Hans Jörg**
**Grenzstrasse 4**
**CH-4800 Zofingen(CH)**

(74) Vertreter: **Reinhard, Skuhra, Weise**
**Leopoldstrasse 51**
**D-8000 München 40(DE)**

(54) Verfahren un Vorrichtung zur Herstellung von Kompaktlingen aus Polymeren und Additiven.

(57) Zur Herstellung von redispergierbaren Kompaktlingen aus Polymeren, insbesondere Polymergranulat, und insbesondere pulverförmigen Additiven unter Mischung des Aufgabegutes werden ein Verfahren und eine Vorrichtung beschrieben. nach dem bzw. mit dem mit geringem maschinellen und energetischen Aufwand agglomeratfreie Poly-Additiv-Compounds mit hohem Füllgrad hergestellt werden, indem als Additive Füllstoffe, Verstärkungsmittel, Pigmente, Flammschutzmittel. Alterungs- und Lichtschutzmittel oder Verarbeitungshilfsmittel mit einem Füllgrad bis zu 85 Gew.% dem Polymer zugeführt werden, und indem das Aufgabegut unter Verwendung von Pelletisiereinrichtungen mehrfach ohne vollständiges Aufschmelzen der Polymere kompaktiert wird, wobei das Aufgabegut bei Bedarf vorgewärmt und die Temperatur der Pelletisiermatrizen beim Kompaktieren gesteuert wird Die Vorrichtung zur Ausführung des Verfahrens sieht eine Pelletisiereinrichtung mit einer aus wenigstens einer Vorpreßplatte und einer Nachpreßplatte bestehenden Matrizenvorrichtung vor. wobei jede Platte eine Heiz- und oder Kühleinrichtung zur Beeinflussung des Pelletiservorganges und eine Schneidevorrichtung aufweist

Fig 1

0152107

Anmelderin: Plüss-Staufer AG

## Verfahren und Vorrichtung zur Herstellung von Kompaktlingen aus Polymeren und Additiven

Die Erfindung betrifft ein Verfahren und eine Vorrichtung zur Herstellung von redispergierbaren Kompaktlingen aus Polymeren, insbesondere Polymergranulat, und insbesondere pulverförmigen Additiven.

Bisher bekannte Verfahren zur Herstellung von Polymer/Füllstoff-Compounds oder -Masterbatches erfordern einen hohen maschinellen und energetischen Aufwand. Es werden Maschinen wie Innenmischer, Einschnecken- und Zweischneckenextruder mit oder ohne Knetelementen, Spezialextruder oder kontinuierliche Mischer und Kneter eingesetzt, wobei das Polymer vollständig aufgeschmolzen werden muß. Für die Verarbeitung des aufgeschmolzenen Polymers sind aufgrund der auftretenden großen Scherkräfte entsprechend dimensionierte und teure Anlagen erforderlich, die zudem viel Energie benötigen.

stellung der Compounds oder Masterbatches wird da- so kostenintensiv, daß ihr Volumenpreis häufig als der Volumenpreis der ungefüllten Polymere liegt. Nachteilig ist bei den vorbekannten Verfahren ferner sehen, daß bei der Herstellung von Füllstoff-Compounds Wachsen bei Füllgraden von 20 bis 50 Gew.% der Elasti- smodul des Fertigteils stark absinkt und keine aus- chende Redispergierbarkeit gegeben ist.

Aufgabe der vorliegenden Erfindung ist es, ein Ver- ren und eine Vorrichtung der eingangs genannten Art schaffen, nach dem bzw. mit der sich mit geringerem schinellen und energetischen Aufwand agglomeratfreie lymer/Additiv-Compounds mit hohem Füllgrad herstellen ssen. Vorzugsweise sollen die Kompaktlinge so gestaltet n, daß keine Verhakungen oder Brückenbildungen in den gabetrichtern der Verarbeitungsmaschinen auftreten.

ese Aufgabe wird erfindungsgemäß dadurch gelöst, daß s Additive Füllstoffe oder Verstärkungsmittel anorgani- her oder organischer Herkunft, Pigmente anorganischer er organischer Art, Flammschutzmittel, Alterungs- und htschutzmittel oder Verarbeitungsmittel mit einem lgrad bis zu 85 Gew.% dem Polymer zugeführt werden, daß das Aufgabegut unter Verwendung von Pelletisierungs- nrichtungen mehrfach ohne vollständiges Aufschmelzen r Polymere kompaktiert wird, wobei das Aufgabegut bei arf zur einwandfreien Kompaktierung vorgewärmt und die mperatur der Pelletisiermatrizen beim Kompaktieren ge- euert wird.

rzugsweise haben die erfindungsgemäßen Kompaktlinge ne zylindrische Gestalt, die vorzugsweise der Form der ndelsüblichen Polymergranulate entspricht. Damit werden nerseits die Verhakungen oder Brückenbildungen in den fgabetrichtern der Verarbeitungsmaschinen verhindert d andererseits wird ein problemloses Abmischen mit

handelsüblichen ungefüllten Polymergranulaten ermöglicht.

Mit dem erfindungsgemäßen Verfahren kann auf die Benutzung verschiedener aufwendiger Maschinen verzichtet werden, da eine Direktverarbeitung von Polymer, insbesondere Polymergranulat, mit Additiv zu einem neuen Granulat erfolgt. Demgemäß fallen auch erheblich geringere Maschinenkosten an. Das erfindungsgemäße Verfahren erfordert nur den Einsatz eines Bruchteils der bisher erforderlichen Energie und führt zu so niedrigen Compoundierkosten, daß der Volumenpreis des Endproduktes niedriger als der Volumenpreis von billigsten Massenpolymeren, wie beispielsweise LDPE, LLDPE, HDPE, PS, PP und PVC ist. Durch die vorgesehene Mehrfachkompaktierung lassen sich bei Thermoplasten, Duromeren und Elastomeren Füllgrade bis zu 60 Gew.% realisieren, während bei der Verwendung von niedermolekularen Polymeren(Polymerwachse) Granulate mit Füllgraden bis zu 85 Gew.% herstellbar sind.

Als Additive werden vorteilhaft Füllstoffe und Verstärkungsmittel anorganischer Art, wie beispielsweise Calciumcarbonat, Talkum, Glimmer, Kaolin, andere natürliche und synthetische Silikate, Feldspäte, Bariumsulfat, Silikatkugeln, Asbest, Wollastonit, Quarz, Metalloxide etc., bevorzugt Calciumcarbonat, Talkum oder Glimmer mit einem Füllgrad bis zu 50 Gew.% zugeführt. Geeignete Füllstoffe und Verstärkungsmittel, wie beispielsweise Glasfasern, Zellulosefasern, etc. sind in H.S. Katz und J.V. Milewski: Handbook of Fillers and Reinforcements for Plastics, Van Nostrand Reinhold Co., New York, 1978 enthalten. Als Pigmente kommen beispielsweise anorganische oder organische Farbpigmente in Frage, wobei geeignete Pigmente, Flammschutzmittel (Aluminiumtrihydrat), Alterungs- und Lichtschutzmittel sowie Verarbeitungshilfsmittel, wie beispielsweise Metalldesaktivatoren, Stabilisatoren, Gleitmittel, Schlagzähmodifier, Metallfasern, Antistatika, Treibmittel, Nukleierungsmittel, etc. unter anderem in R. Gächter und H. Müller: Taschenbuch der Kunststoff-Additive, 2. Ausgabe, Carl Hanser Verlag, München 1983, genannt sind.

Die mehrfache Kompaktierung des Aufgabegutes erfolgt vorzugsweise in hintereinander oder übereinander geschalteten Kompaktoren bzw. Pelletisieranlagen, bevorzugt in einem Doppelkompaktor. Durch die Wiederholung des Kompaktierschrittes wird eine genügende Verknetung zur Erzielung einer redispergierbaren Form erzielt. Dabei wird bei dem erfindungsgemäßen Verfahren auch Energie eingespart, da das Polymer nicht vollständig aufgeschmolzen zu werden braucht.

Das Aufgabegut wird weiterhin bei Bedarf vorteilhaft zur einwandfreien, d. h. agglomeratfreien Kompaktierung vorgewärmt, wobei diese Vorwärmung bevorzugt dann vorgenommen wird, wenn die Glasübergangstemperatur der Polymere oder der Schmelzpunkt der Polymerkristalle zu hoch liegt und keine einwandfreie Kompaktierung erreicht wird, wenn die Rohmaterialien Zimmertemperatur besitzen.

Zur Durchführung des Verfahrens wird zudem vorteilhaft die Temperatur der Pelletisier- bzw. Kompaktormatrizen beim Kompaktieren gesteuert, was bevorzugt elektrisch oder mittels wärmeübertragender Medien, wie beispielsweise Wasser, Wärmeübertragungsöle, etc. vorgenommen wird. Hierdurch kann die Temperatur an den Flächen der Matrize in gewünschter Weise festgelegt werden, indem beispielsweise Kühlmittel als Schutz gegen Überhitzung der Matrize eingeleitet wird, und beispielsweise ein Heizmedium zur Beseitigung von nach einer Unterbrechung des Verfahrens erstarrten Granulatresten verwendet werden.

Das erfindungsgemäße Verfahren eignet sich für die Verarbeitung von Polymeren als Pulver oder Schnitzel und bevorzugt als Granulat, insbesondere von Thermoplasten und Duromeren vor dem Vernetzungsvorgang.

Bei der Ausführung des Verfahrens ist es z. B. möglich, bei Hintereinanderschaltung von zwei Kompaktoren mit verschiedenen Arbeitsbedingungen bis zu 50 Gew.% $CaCO_3$ mit 50 Gew.% LDPE, HDPE, LLDPE, PS, EVAC oder PP agglomeratfrei zu kompaktieren und anschließend zu verdünnen, respektive mit reinem LDPE, HDPE, LLDPE, PS, EVAC oder PP in Verdünnung zu verarbeiten.

Zur Lösung der obengenannten Aufgabe ist erfindungsgemäß bei einer Matrizenvorrichtung für Pelletisiereinrichtungen zur Durchführung des erfindungsgemäßen Verfahrens mit wenigstens einer ebenen, vorzugsweise kreisringförmigen, Durchgangslöcher aufweisenden Platte, die durch eine Pelletierpressrolleneinrichtung beaufschlagbar ist, vorgesehen, daß die Matrizenvorrichtung wenigstens zwei unterschiedliche Platten in Form einer Vorpreßplatte und einer Nachpreßplatte besitzt, wobei jede Platte eine Heiz- und/oder Kühleinrichtung zur Beeinflussung des Pelletisiervorganges und eine Schneidevorrichtung aufweist.

Durch die erfindungsgemäße Ausbildung der Matrizenvorrichtung kann das erfindungsgemäße Verfahren mit einem geringen maschinellen und energetischen Aufwand zur Herstellung von agglomeratfreien Polymer/Additiv-Compounds mit hohem Füllgrad durchgeführt werden, da das Polymer, insbesondere Polymergranulat direkt mit Additiv zu einem neuen Granulat verarbeitet werden kann. Dabei erfolgt im Zusammenhang mit den jeweils vorgesehenen Pelletierpreßrolleneinrichtungen an der Vorpreßplatte und an der Nachpreßplatte eine ausreichende Verknetung, die den Einsatz zusätzlicher Maschinen überflüssig macht und zur Erzielung einer redispergierbaren Form führt. Die mit der erfindunsgemäßen Matrizenvorrichtung versehene Pelletisiereinrichtung sorgt in günstiger Weise dafür, daß mindestens eine Doppelkompaktierung vorgenommen wird, wobei das Polymer nicht vollständig aufgeschmolzen zu werden braucht. Die vorgesehene Heiz- und/oder Kühleinrichtung sorgt bei der Durchführung des Verfahrens vorteilhaft dafür, daß die Temperatur an den Flächen der Vorpreßplatte und der Nachpreßplatte in gewünschter Weise eingestellt werden kann. Die jeweils vorgesehene Schneidvorrichtung trägt bei der Vorpreßplatte in günstiger Weise zur Vermischung des Aufgabegutes und bei der Nachpreßplatte zur Bildung der gewünschten Form der Kompaktlinge bei.

Bevorzugt ist die Vorpreßplatte über der Nachpreßplatte angeordnet, wodurch sich eine günstigere Verteilung des Aufgabegutes über die jeweiligen Platten ergibt.

Die Platten weisen bevorzugt unterschiedliche Dicken auf, wobei die Vorpreßplatte vorzugsweise eine Dicke von etwa 20 bis 30 mm und die Nachpreßplatte eine Dicke von etwa 40 bis 60 mm besitzt.

Die Durchgangslochdurchmesser der Vor- und der Nachpreßplatte weisen vorzugsweise unterschiedliche Durchgangslochquerschnitte auf, wobei bevorzugt Kreisdurchmesser der Vorpreßplatte von etwa 2,0 bis 3,0 mm und bei der Nachpreßplatte von etwa 3,2 bis 4,8 mm vorgesehen sind.

Für eine günstige Durchführung des Verfahrens ist es vorteilhaft, wenn jede Heiz- und/oder Kühleinrichtung vorzugsweise auf 100 bis 200°C regelbar ist, wobei die Heiz- und/oder Kühleinrichtung bevorzugt mittels wärmeübertragender Medien regelbar ist, die in der jeweiligen Platte zwischen den Durchgangslöchern vorhanden sind. Bevorzugt gehört zu der Heiz- und/oder Kühleinrichtung eine vorzugsweise an der Unterseite der jeweiligen Platte angeordnete elektrische Heizeinrichtung.

Die Platten der Matrizenvorrichtung sind bevorzugt so gestaltet, daß jede Platte eine Einlaufzone von etwa 4 bis 6 mm Länge, einen Einlaufwinkel von etwa 48 bis 72 Grad und einen Lochabstand von etwa 7 bis 15 mm aufweist.

Für die Herstellung von Kompaktlingen mit zylindrischer Gestalt, die vorzugsweise der Form der handelsüblichen Polymergranulate entspricht, ist bevorzugt vorgesehen, daß wenigstens die Nachpreßplatte runde Durchgangslöcher aufweist und die Länge der durchtretenden zylindrischen Kompaktlinge durch die entsprechende Betätigung der unterhalb der Nachpreßplatte angeordneten Schneidvorrichtung einstellbar ist.

Weitere Einzelheiten, Merkmale und Vorteile der Erfindung ergeben sich aus dem anschließenden Beschreibungsteil, in dem ein Ausführungsbeispiel der erfindungsgemäßen Vorrichtung unter Bezugnahme auf die beigefügten Zeichnungen und anschließend Ausführungsbeispiele des erfindungsgemäßen Verfahrens näher erläutert werden. Es zeigen:

Fig. 1 eine schematische Seitenansicht einer Pelletisiereinrichtung mit der erfindungsgemäßen Matrizenvorrichtung;

Fig. 2 eine vergrößerte teilweise weggebrochene Schnittdarstellung einer bevorzugten Gestaltung der Vorpreß- und Nachpreßplatte;

Fig. 3 eine vergrößerte, teilweise weggebrochene Schnittansicht einer temperaturgesteuerten Matrizenplatte; und

Fig. 4 einen vergrößerten Teilschnitt durch eine modifizierte temperaturgesteuerte Matrizenplatte.

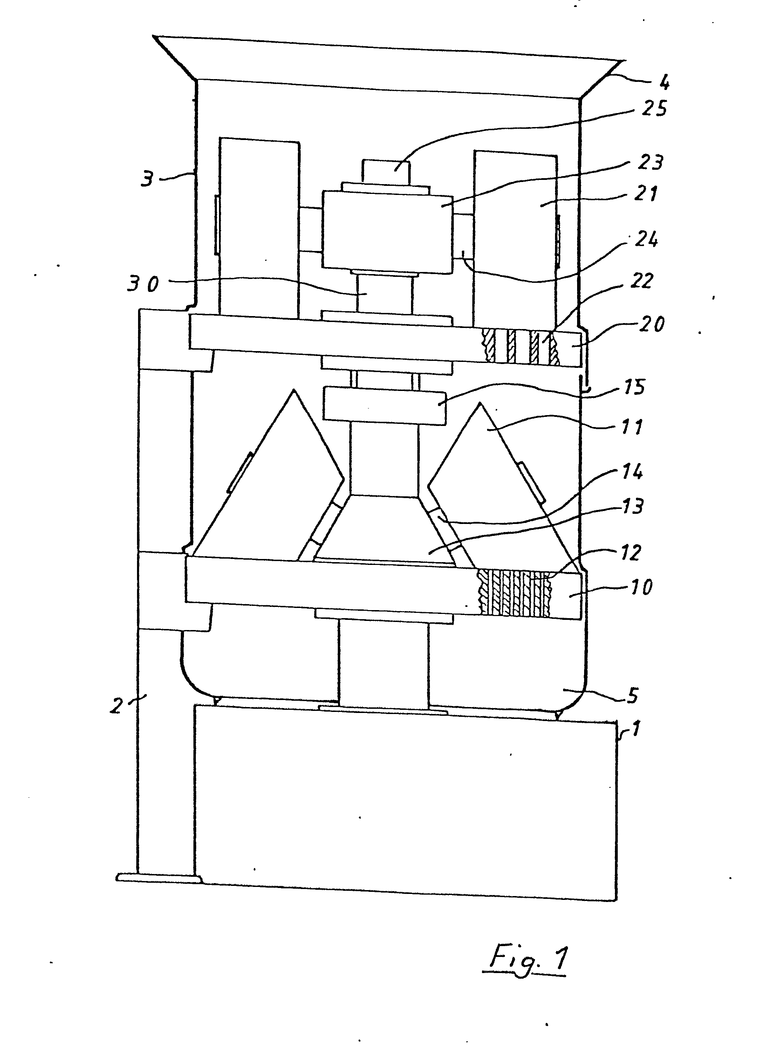

In Fig. 1 ist schematisch eine Pelletisiereinrichtung mit einer aus einer Vorpreßplatte bzw. Matrize 20 und einer Nachpreßplatte bzw. Matrize 10 gebildeten Matrizenvorrichtung dargestellt, die auch als Doppelpelletisierein-

0152107

richtung oder Doppelkompaktor bezeichnet werden kann.

Aus einem Getriebegehäuse 1 erstreckt sich lotrecht nach oben eine Königswelle 30, die durch eine im unteren Bereich des Getriebegehäuses 1 an Säulen 2 abgestützte runde, ebene Nachpreßplatte 10 und eine im oberen Bereich des Getriebegehäuses 1 durch Säulen 2 abgestützte runde, ebene Vorpreßplatte 20 tritt. An der Königswelle 30 sind ein unterer Kollerkopf 13 und ein oberer Kollerkopf 23 drehfest angeordnet. Der untere Kollerkopf 13 besitzt schräg nach oben weisende Achsen 14, an denen frei drehbar kegelförmige Preßrollen 11 befestigt sind. An dem oberen Kollerkopf 23 sind über horizontal austretende Achsen 24 zylindrische Preßrollen 21 drehbar gelagert. Zum Beaufschlagen der Vorpreßplatte 20 und der Nachpreßplatte 10 mit den jeweiligen Preßrollen 21 bzw. 11 sind jeweils Andrückeinrichtungen 15 bzw. 25 vorgesehen.

Die beiden Stufen der Pelletisiereinrichtung sind durch Schutzhauben 3 umkleidet, wobei an dem oberen Ende der Pelletisiereinrichtung ein Trichter 4 vorgesehen ist, durch den das zu bearbeitende Material eingeworfen wird. Unter der als Matrize ausgebildeten Nachpreßplatte 10 ist ein Sammelraum 5 ausgebildet, der die hergestellten Kompaktlinge aufnimmt und in dem eine nicht dargestellte Einrichtung zum Auswerfen derselben angeordnet sein kann. Zur Vereinfachung der Darstellung wurden bei dieser Figur die für jede Platte vorgesehenen Heiz- und/oder Kühleinrichtungen zur Beeinflussung des Pelletisiervorganges sowie die Schneidevorrichtungen weggelassen. Des weiteren ist darauf hinzuweisen, daß abweichend von der nach einer Weiterbildung der Erfindung bevorzugt vorgesehenen Ausbildung die Durchgangslöcher 22 der Vorpreßplatte 20 größer als die Durchgangslöcher 12 der Nachpreßplatte 10 sind.

Zur Durchführung des Verfahrens wird das vorgesehene Aufgabegut in den Trichter 4 eingeworfen und gelangt in die erste Stufe der Pelletisiereinrichtung, in der das Gut unter Einwirkung der über die Königswelle 30 angetriebenen Preßrollen 21 kompaktiert und im Zusammenwirken mit der Vorpreßplatte 20 und den Durchgangslöchern 22 pelletisiert wird. Die austretenden Stränge der ersten Stufe werden durch eine nicht dargestellte Schneidevorrichtung auf eine vorbestimmte Länge abgeschnitten. Eine mögliche Verdichtung des Materials in den Durchgangslöchern 22 ist von untergeordneter Bedeutung, da die abgegebenen Pellets in der zweiten Stufe durch die Preßrollen 11 auf der Nachpreßplatte 10 wieder zerstört werden. Hierbei findet ein weiteres Mischen des Aufgabegutes statt, und das Material wird dann unter hohem Druck in die Eintrittsöffnungen der Durchgangslöcher 12 und durch diese hindurchgedrückt. Hierbei wird das vermischte Aufgabegut weiter verfestigt und so verdichtet, daß dem Querschnitt der Durchgangslöcher 12 entsprechend geformte Pelletstränge extrudiert werden. Die Durchgangslöcher 12 haben bevorzugt einen Kreisquerschnitt. Unterhalb der Nachpreßplatte 10 ist eine nicht dargestellte Schneidevorrichtung vorgesehen, die die extrudierten Stränge in die Form handelsüblicher Polymergranulate zerschneidet, um Verhakungen oder Brückenbildungen in den Aufgabetrichtern der Verarbeitungsmaschinen zu verhindern und ein problemloses Abmischen mit handelsüblichen ungefüllten Polymergranulaten zu ermöglichen.

Die Dicke der Nachpreßplatte 10 ist größer als die der Vorpreßplatte 20, um verhältnismäßig lange Preßwege zu erhalten, die zur Herbeiführung einer ausreichenden Festigkeit der Kompaktlinge günstig sind. Die Durchmesser und die Länge der oberen und der unteren Durchgangslöcher, die in den ebenen kreisringförmigen Platten eingebracht sind, sind so aufeinander abgestimmt, daß die Menge des vorpelletisierten und vorverdichteten Materials, die durchschnittlich durch die oberen Durchgangslöcher 22 gelangt, nicht größer als die Menge ist, die durch die unteren Durchgangslöcher 12 ausgestoßen wird.

Durch die erfindungsgemäß vorgesehene zweistufige Ausgestaltung der Pelletisiereinrichtung mittels einer eine Vorpreßplatte und eine Nachpreßplatte aufweisenden Matrizenvorrichtung sowie der vorgesehenen jeweiligen Heiz- und/oder Kühleinrichtung zur Beeinflussung des Pelletisiervorganges und der entsprechenden Schneidvorrichtungen ist es möglich, Material ohne andere Vorbehandlung zu pelletisieren. Durch die Anordnung von zwei Kollergängen übereinander werden Investitionskosten, Aufstellungsplatz und Arbeit gespart. Außerdem ermöglicht eine derartige Anordnung eine gleichmäßige Materialzuführung und einen gleichmäßigen Ausstoß. Die dargestellte Pelletisiereinrichtung kann in verschiedener Weise abgewandelt werden. Bevorzugt ist zur Vermeidung eines klumpenförmigen Aufbaues vor dem Kollerkopf (Kugelagglomeratbildung) wenigstens die Vorpressplatte mit einer Verzahnung versehen, in die Verzahnungen eingreifen, die an den Pressrollen vorgesehen sind. Vorzugsweise sind die Pressrollen-Verzahnungen an kegelförmigen Pressrollen vorgesehen. Eine andere Abwandlung kann darin bestehen, die Kollerköpfe an einer festen mittleren Säule anzuordnen und an dieser die Matrizen drehbar zu lagern und sie mit Antriebseinrichtungen an ihrem äußeren Umfang zu versehen. Entsprechend dem zu behandelnden Material, seinem Zustand nach der Vorbehandlung der ersten Stufe und den gewünschten Eigenschaften der Pellets sind die Vor- und Nachpreßplatten bzw. deren Durchgangslöcher und die mit ihnen zusammenwirkenden zylindrischen oder kegelförmigen, gegebenenfalls verzahnten Preßwalzen zu wählen. Auch bei einfach zu behandelndem Aufgabegut ist die zweifache Kompaktierung von Vorteil, um einen hohen Durchsatz bei einer guten Durchmischung zu erreichen. Die Mehrfachkompaktierung kann sinngemäß auch durch Hintereinanderschalten von mehreren, einzeln angetriebenen Pelletisiereinrichtungen mit einer

jeweils nur eine Preßplatte aufweisenden Matrizenvorrichtung gelöst werden. Die vorzugsweise zylindrische Gestalt der erfindungsgemäßen Kompaktlinge wird bevorzugt dadurch erreicht, daß der letzte Pelletisiervorgang durch eine Matrize bzw. Preßplatte mit entsprechenden runden Löchern und einer auf die Länge der zylindrischen Kompaktlinge abgestimmten Schneidvorrichtung unterhalb der Matrize bzw. Preßplatte durchgeführt wird.

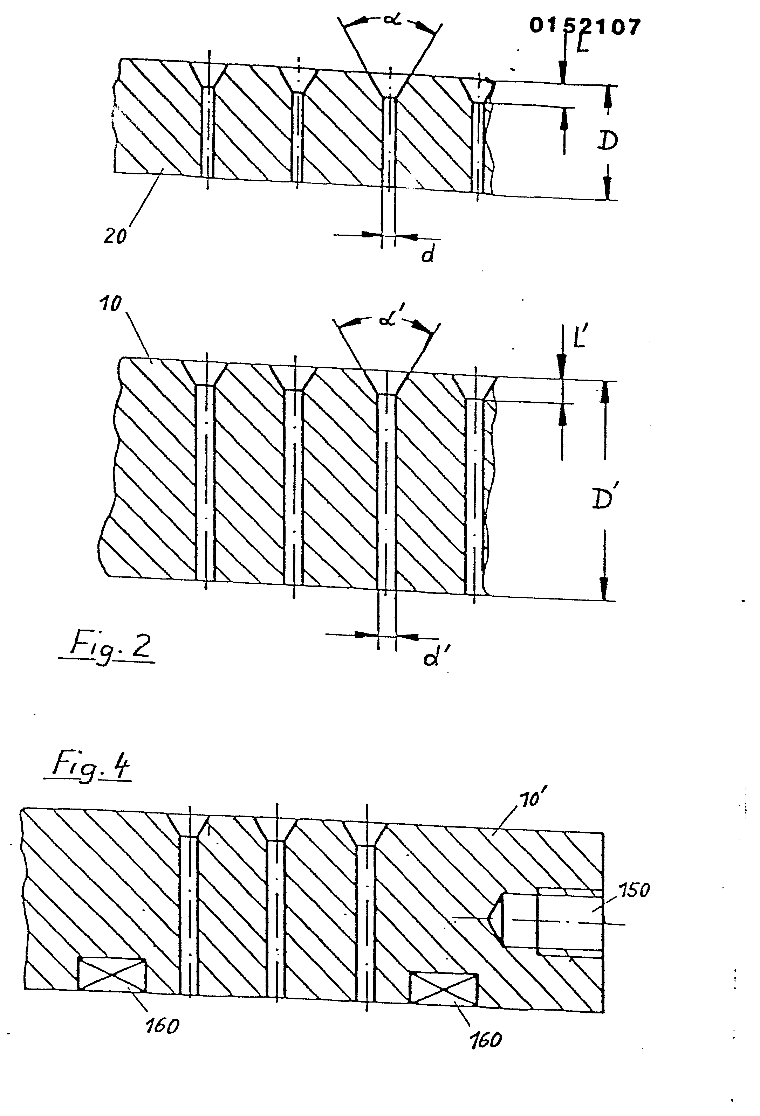

In Fig. 2 ist eine bevorzugte Matrizenausbildung der Vorpreßplatte 20 und der Nachpreßplatte 10 dargestellt. Die Dicke D der Vorpreßplatte 20 beträgt 25 mm, während die Nachpreßplatte 10 eine Dicke D' von 50 mm aufweist. Die Durchgangslöcher der beiden Platten sind als Bohrungen ausgebildet, wobei der Durchmesser d der Vorpreßplatte 20 2,5 mm und d' der Nachpreßplatte 10 4 mm beträgt. Die Durchgangslöcher münden an der jeweiligen Oberseite der Platten in eine Einlaufzone L, L' von 5 mm Länge, besitzen einen Einlaufwinkel $\alpha$, $\alpha'$ von 60 Grad und einen Lochabstand in axialer Richtung von 12,5 mm und in radialer Richtung von 8,5 mm.

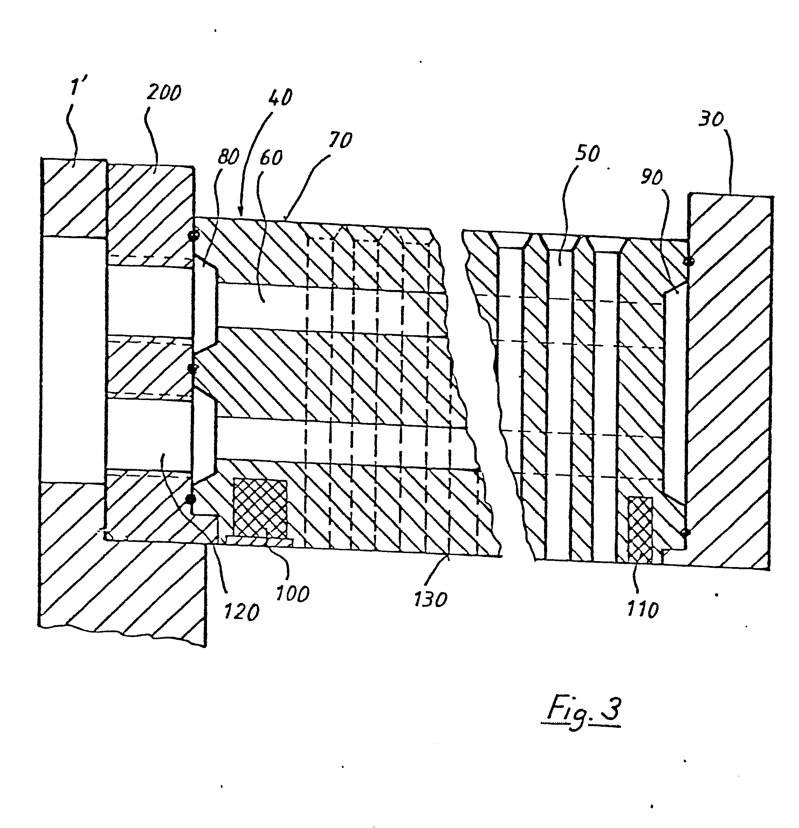

Fig. 3 zeigt ein Ausbildungsbeispiel einer temperaturgesteuerten Matrizenplatte, die sowohl als Vor- wie auch als Nachpreßplatte verwendet werden kann. Die Matrizenplatte 40 ist zwischen einem äußeren Matrizenring 200 und einem inneren Matrizenring 300 gehalten bzw. eingespannt und gegen ein Verdrehen relativ zu den Matrizenringen gesichert. Die Matrizenplatte 40 ist eben und kreisringförmig ausgebildet und weist Durchgangslöcher 50 mit kreisförmigem Querschnitt auf. Der äußere Matrizenring 200 stützt sich in einem Maschinengehäuse 1' ab. Am äußeren Umfangsrand der Matrizenplatte 40 sind zwei Verteilernuten 80 ausgedreht, von denen sich radial Durchflußkanäle 60 zu einer im inneren Matrizenumfang ausgebildeten Umlenknut 90 erstrecken, die die beiden Kanäle verbindet. In die Verteilernuten 80 wird ein vorzugsweise flüssiges Heiz- oder Kühlmedium durch eine Anschlußbohrung 120 eingeführt bzw. abgeleitet. Die Durchflußkanäle 60 verlaufen übereinander und parallel zu der Oberseite 70 der Matrizenplatte 40 zwischen den Durchgangslöchern 50. An der Unterseite 130 der Matrizenplatte 40 sind Heizbänder 100, 110 zur elektrischen Beheizung vorgesehen, die vorzugsweise in Ringnuten angeordnet sind.

Durch eine Beheizung kann die Matrizenplatte vor Inbetriebnahme der Pelletisiereinrichtung auf die Betriebstemperatur erwärmt werden. Während des Betriebes kann die insbesondere in den Durchgangslöchern entstehende Reibungswärme über die Kühlkanäle abgeführt werden. Hierdurch wird auch die Erwärmung der Oberseite der Matrizenplatte derart vermindert, daß eine bessere Vermischung des Aufgabegutes, beispielsweise feinkörnigem Kunststoff mit feinstem Pulver, ermöglicht wird. Die Kühlung verhindert außerdem ein Festbrennen oder Aufschmelzen des Kunststoffes an irgendeiner Stelle der Matrizenplatte. Für den Fall, daß sich Stoffe in den Durchgangslöchern festgesetzt haben und durch den normalen Betrieb nicht weiter extrudiert werden können, ermöglichen die von einem Heizmedium durchflossenen Kanäle, gegebenenfalls zusammen mit den Heizbändern, die Verminderung der Viskosität der Stoffe oder schmelzen diese auf, so daß die Löcher ohne mechanische Einwirkung wieder freigelegt werden können. Die vorgesehene Heiz- und/oder Kühleinrichtung dient in vorteilhafter Weise nicht nur zur günstigeren Gestaltung des erfindungsgemäßen Verfahrensablaufs, sondern auch der problemlosen Beseitigung von Störungen.

In Fig. 4 ist eine andere Ausführungsform einer Matrizenplatte 10' ohne Kanäle für wärmeübertragende Medien dargestellt. Die Temperatursteuerung erfolgt bei dieser Matrizenplatte über einen in eine seitliche Öffnung 150 einschraubbaren, nicht dargestellten Temperaturfühler, der die unterhalb der Matrizenplatte schematisch ange-

0152107

deuteten Heizelemente 160 derart zu regeln vermag, daß die Temperatur der Matrizenplatte vorzugsweise zwischen 100 und 200°C beträgt.

Im folgenden werden dreizehn verschiedene Ausführungsbeispiele für das erfindungsgemäße Verfahren näher erläutert.

## 1. Beispiel

75 Gew.% granulatförmiges LDPE mit Schmelzindex 7 (gemessen bei 190°C, 2,16 kg, abgekürzt 190/2,16) und 25 Gew.% gemahlenes stearinsäurebeschichtetes, natürliches Calciumcarbonat mit mittlerem Teilchendurchmesser von 1,5 µm und gröbstem Teilchendurchmesser von 10 µm (Markenbezeichnung Omyalite 90 T der Firma Plüss-Staufer AG, CH-4665 Oftringen) wurden in einem Doppelkompaktor mit den folgenden Matrizenplattenbedingungen dosiert:

|  | 1.Pelletisierung Vorpressen (20) | 2.Pelletisierung Nachpressen (10) |
|---|---|---|
| Dicke der Matrizenplatte D, D' | 25 mm | 50 mm |
| Lochdurchmesser d, d' | 2,5 mm | 4,0 mm |
| Einlaufzone L, L' | 5,0 mm | 5,0 mm |
| Einlaufwinkel $\alpha, \alpha'$ | 60° | 60° |
| Lochabstand in axialer Richtung | 12,5 mm | 12,5 mm |
| Lochabstand in radialer Richtung | 8,5 mm | 8,5 mm |
| Temperatur der Matrize | 120°C | 120°C |

wie in der beiliegenden Zeichen 2 für den Vor- und Nachpreßvorgang und in Zeichnung 4 für die Temperatursteuerung der Matrizenplatten dargestellt.

Die zweimal pelletisierten Kompaktlinge konnten anschließend auf einem Einschnecken-Extruder mit einer Schneckenlänge von 25 D ohne Entgasung agglomeratfrei zu Profilen extrudiert werden. Es war auch ohne weiteres möglich, die zylinderförmigen Kompaktlinge mit reinem LDPE-Granulat abzumischen und anschließend agglomeratfreie Extrudate oder Filme zu erzielen.

## 2. Beispiel

50 Gew.% LDPE-Granulat mit Schmelzindex 3 (190/2,16) und 50 Gew.% Omyalite 90 T wurden mit den gleichen Matrizenplattenbedingungen für beide Pelletisiervorgänge und bei gleichen Temperaturen wie in Beispiel 1 zu einwandfrei redispergierbaren Kompaktlingen pelletisiert und in Ein- und Zweischnecken-Extrudern von 25 D agglomeratfrei verarbeitet.

## 3. Beispiel

50 Gew.% LDPE-Granulat mit Schmelzindex 1 (190/2,16) und 50 Gew.% Calciumcarbonat mit mittlerem Teilchendurchmesser von 3 µm und gröbsten Teilchen von 15 µm (Markenbezeichnung Millicarb der Firma Plüss-Staufer AG) wurden mit den gleichen Matrizenplattenbedingungen für beide Pelletisiervorgänge wie in Beispiel 1 zu einwandfrei redispergierbaren Kompaktlingen verarbeitet.

## 4. Beispiel

50 Gew.% HDPE-Granulat mit Schmelzindex 1 (190/5) und 50 Gew.% Omyalite 90 T wurden mit den Matrizenplatten des Beispiels 1, jedoch mit einer Temperatur von 120°C für den ersten Pelletisier- und mit 135°C für den zweiten Pelletisiervorgang, zu einwandfrei im Extruder oder beim Spritzguß redispergierbaren, zylinderförmigen Kompaktlingen verarbeitet.

## 5. Beispiel

50 Gew.% granulatförmigem Homopolypropylen (Spritzgußqualität) mit Schmelzindex 15 (gemessen bei 230°C, 2,16 kg) und 50 Gew.% Oymalite 90 T wurden mit den Matrizenplatten des Beispiels 1, jedoch mit einer Matrizenplattentemperatur von 185°C für beide Pelletisiervorgänge, zu agglomeratfreien, zylinderförmigen Kompaktlingen verarbeitet, die mit unbehandeltem Polymer (virgin polymer) gemischt und ohne Agglomeratbildung im Endprodukt im Spritzgußverfahren verarbeitbar sind.

## 6. Beispiel

50 Gew.% PP-Granulat mit Schmelzindex 1 (230/2,16) (Qualität zur Herstellung von tiefziehfähigen Platten) und 50 Gew.% Omyalite 90 T wurden mit den Bedingungen von Beispiel 5 zu einwandfrei redispergierbaren Kompaktlingen verarbeitet.

## 7. Beispiel

60 Gew.% PP-Granulat (Schmelzindex 15 bei 230/2,16 und 40 Gew.% Talkum mit mittlerem Teilchendurchmesser von 10 µm (Markenbezeichen OXO der Fa. Talc de Luzenac, F-09250 Luzenac) wurden mit den Matrizen des Beispiels 1 und einer Matrizentemperatur von 180°C zu einwandfrei redispergierbaren Kompaktlingen pelletisiert.

## 8. Beispiel

60 Gew.% PP-Granulat mit Schmelzindex 50, 25 Gew.%
Omyalite 90 T und 15 Gew.% Talk OXO wurden mit den
Matrizenplatten- und Temperaturbedingungen des Beispiels
7 zu zylinderförmigen Kompaktlingen verarbeitet, die mit unbehandeltem
Polymer (virgin polymer) gemischt und ohne Agglomeratbildung im Endprodukt im Spritzgußverfahren verarbeitet wurden.

## 9. Beispiel

60 Gew.% PP-Granulat (Schmelzindex 15) und 40 Gew.%
Glimmer mit mittlerem Teilchendurchmesser von 14 µm
(Markenbezeichnung Mica 3X der Fa. Gouzée & Cie.,
F-75442 Paris) wurden mit den in Beispiel 7 genannten
Bedingungen zu einwandfrei redispergierbaren Kompaktlingen pelletisiert.

## 10. Beispiel

18 Gew.% niedermolekulares Polymer in Form von EVAC
der Firma Bayer AG, D-5090 Leverkusen.

wurde mit 82 Gew.% Millicarb und den
Matrizenplatten des Beispiels 1, jedoch bei Matrizentemperaturen von 20 - 30°C, zu gut redispergierbaren,
höchstgefüllten, zylinderförmigen Füllstoffkompaktlingen
verarbeitet, die sich anschließend verdünnt mit Polyolefingranulat extrudieren oder beim Spritzgießen verarbeiten ließen,
ohne daß Agglomerate im Endprodukt auftraten.

## 11. Beispiel

60 Gew.% LDPE-Granulat mit Schmelzindex 7 (190/2,16) und 40 Gew.% Aluminiumtrihydrat (Markenbezeichnung Martinal C der Martinswerke, D-5010 Bergheim) wurden mit den Matrizenplatten des Beispiels 1 und einer Matrizenplattentemperatur von 130°C für beide Matrizenplatten zweifach pelletisiert und einwandfrei redispergierbare Kompaktlinge erzielt.

## 12. Beispiel

Eine typische Hart-PVC-Dryblendmischung mit hohem Füllgrad hergestellt auf einem üblichen Heiz- Kühlmischer mit der Formel:

| | | |
|---|---|---|
| Hart-PVC-Pulver | 100 | Gew.-Teile |
| Stabilisatoren Compound | 2 - 6 | " " |
| Wachse | 0,1-1,0 | " " |
| Schlagzähmodifier | 3 - 5 | " " |
| Calciumcarbonat-Füll-stoff | 50 | " " |

wurde auf einer Doppelpelletisieranlage nach Beispiel 1 und mit Matrizenplattentemperaturen von 120°C für den ersten Pelletisier- und von 140°C für den zweiten Pelletisiervorgang zu einwandfrei redispergierbaren, zylindrischen Pellets kompaktiert, welche beim Transport, Lagern und Verarbeiten im Gegensatz zum pulverförmigen Dryblend kein Stauben und keine Seggregation des Füllstoffes beim Transport zeigen.

## 13. Beispiel

60 Gew.% schlagzähes Polystyrolgranulat mit Schmelzindex 4 (200/5) und 40 Gew.% Millicarb wurden mit den
in Beispiel 1 angegebenen Matrizenplatten und einer Matrizenplattentemperatur von 110°C zu einwandfrei redispergierbaren, zylinderförmigen Kompaktlingen
pelletisiert.

Anmelderin : Plüss-Staufer AG

P a t e n t a n s p r ü c h e

1.  Verfahren zur Herstellung von redispergierbaren Kompaktlingen aus Polymeren, insbesondere Polymergranulat,
    und aus dem Polymer zugeführten Additiven, wobei das
    Aufgabegut unter Verwendung einer Pelletisiereinrichtung
    ohne vollständiges Aufschmelzen der Polymere kompaktiert
    wird,
    d a d u r c h   g e k e n n z e i c h n e t,
    daß dem Polymer die Additive mit einem Füllgrad bis zu
    85 Gew.% in Form von Füllstoffen, Verstärkungsmitteln,
    Pigmenten, Flammschutzmitteln, Alterungs- und Lichtschutzmitteln oder Verarbeitungshilfsmitteln zugeführt
    werden, und daß das Aufgabegut in einer Pelletisiermatrizen aufweisenden Pelletisiereinrichtung mehrfach
    kompaktiert wird, wobei das Aufgabegut bei Bedarf
    vorgewärmt und die Temperatur der Pelletisiermatrizen
    beim Kompaktieren gesteuert wird.

Verfahren nach **Anspruch 1**, dadurch gekennzeichnet,
daß als Pelletisiereinrichtung hintereinander oder
übereinandergeschaltete Kompaktoren benutzt werden.

Verfahren nach Anspruch 1 oder 2,
dadurch gekennzeichnet
daß in einem Doppelkompaktor pelletiert wird.

Verfahren nach einem der vorhergehenden Ansprüche,
dadurch gekennzeichnet,
daß die Temperatur der Pelletisiermatrizenplatten elektrisch und/oder mittels wärmeübertragender Medien, vorzugsweise auf 100 bis 200°C gesteuert wird.

Verfahren nach einem der vorangehenden Ansprüche,
dadurch gekennzeichnet,
daß als Polymere Thermoplaste, Duromere und Elastomere,
einschließlich niedermolekularer Polymere (Polymerwachse) verwendet werden.

Verfahren nach einem der vorangehenden Ansprüche,
dadurch gekennzeichnet,
daß Massenpolymere wie LDPE, LLDPE, HDPE, PP, PS, EVAC
und PVC verwendet werden.

Verfahren nach einem der vorangehenden Ansprüche,
dadurch gekennzeichnet,
daß die Polymeren als Granulat, Schnitzel oder Pulver
verwendet werden.

Verfahren nach einem der vorangehenden Ansprüche,
dadurch gekennzeichnet,
daß anorganische oder organische Füllstoffe verwendet
werden.

Verfahren nach einem der vorangehenden Ansprüche,
dadurch gekennzeichnet,

daß als Füllstoff Calciumcarbonat verwendet wird.


10.  Verfahren nach einem der vorangehenden Ansprüche,
     dadurch gekennzeichnet,
     daß als Füllstoff Talkum oder Glimmer verwendet wird.


11.  Verfahren nach einem der vorangehenden Ansprüche,
     dadurch gekennzeichnet,
     daß anorganische oder organische Verstärkungsmittel
     verwendet werden.


12.  Verfahren nach einem der vorangehenden Ansprüche,
     dadurch gekennzeichnet,
     daß als Verstärkungsmittel Glasfasern verwendet werden.


13.  Verfahren nach einem der vorangehenden Ansprüche,
     dadurch gekennzeichnet,
     daß anorganische oder organische Pigmente gegebenenfalls
     in Kombination mit Mineralfüllstoffen verwendet werden.


14.  Verfahren nach einem der vorangehenden Ansprüche,
     dadurch gekennzeichnet,
     daß als Flammschutzmittel Aluminiumtrihydrat gegebenenfalls in Kombination mit Mineralfüllstoffen verwendet
     wird.


15.  Verfahren nach einem der vorangehenden Ansprüche,
     dadurch gekennzeichnet,
     daß als Verarbeitungshilfsmittel Metalldesaktivatoren
     und/oder Stabilisatoren und/oder Gleitmittel und/oder
     Schlagzähmodifier und/oder Metallfasern und/oder Antistatika und/oder Treibmittel und/oder Nukleierungsmittel
     gegebenenfalls in Kombination mit Mineralfüllstoffen
     verwendet werden.


16.  Verfahren nach einem der vorangehenden Ansprüche, dadurch gekennzeichnet,
daß für die Füllstoffe ein Füllgrad bis zu 60 Gew.%
eingehalten wird.

Verfahren nach einem der vorangehenden Ansprüche,
dadurch gekennzeichnet,
daß als Füllstoff bis zu 50 Gew.% Calciumcarbonat
verwendet werden.

Verfahren nach einem der vorangehenden Ansprüche,
dadurch gekennzeichnet,
daß 50 Gew.% Calciumcarbonat und 50 Gew.% Polyethylen
oder PP verwendet werden.

Verfahren nach einem der vorangehenden Ansprüche,
dadurch gekennzeichnet,
daß 85 Gew.% Füllstoffe und 15 Gew.% Polymerwachse
verwendet werden.

Verfahren nach einem der vorangehenden Ansprüche,
dadurch gekennzeichnet,
daß die Additive in Pulverform verwendet werden.

Verfahren nach einem der vorangehenden Ansprüche,
dadurch gekennzeichnet,
daß zur Erzielung einer zylindrischen Gestalt der
Kompaktlinge der letzte Pelletisiervorgang durch eine
Matrizenplatte mit entsprechenden runden Löchern und
einer auf die Länge der zylindrischen Kompaktlinge
abgestimmte Schneidvorrichtung unterhalb der Matrizenplatte durchgeführt wird.

Matrizenvorrichtung für Pelletisiereinrichtungen zur
Durchführung des Verfahrens nach einem der Ansprüche 1
bis 21, mit wenigstens einer ebenen Platte, die durch
eine Pelletisier-Pressrolleneinrichtung zum Auspressen von Kompaktlingen durch Durchgangslöcher beaufschlagbar
ist, und die eine Heiz- und/oder Kühleinrichtung zur
Beeinflussung des Pelletisiervorganges und eine Schneidvorrichtung aufweist,

dadurch gekennzeichnet,

daß die Matrizenvorrichtung wenigstens zwei, vorzugsweise kreisringförmige, unterschiedliche Matrizenplatten
in Form einer Vorpreßplatte (20) und einer Nachpreßplatte (10) besitzt.

23. Vorrichtung nach Anspruch 22,
    dadurch gekennzeichnet,
    daß die Vorpreßplatte (20) über der Nachpreßplatte (10)
    angeordnet ist.

24. Vorrichtung nach Anspruch 22 oder 23,
    dadurch gekennzeichnet,
    daß die Platten (20,10) unterschiedliche Dicken aufweisen.

25. Vorrichtung nach Anspruch 24,
    dadurch gekennzeichnet,
    daß die Vorpreßplatte (20) eine Dicke von etwa 20 bis
    30 mm und die Nachpreßplatte (10) eine Dicke von etwa
    40 bis 60 mm besitzt.

26. Vorrichtung nach einem der Ansprüche 22 bis 25,
    dadurch gekennzeichnet,
    daß die Platten unterschiedliche Durchgangslochquerschnitte aufweisen.

27. Vorrichtung nach Anspruch 26,
    dadurch gekennzeichnet,
    daß die Durchgangslochquerschnitte der Vorpreßplatte (20)
    einen Kreisdurchmesser d von etwa 2,0 bis 3,0 mm und die
    der Nachpreßplatte (10) einen Kreisdurchmesser d' von
    etwa 3,2 bis 4,8 mm besitzen.

Vorrichtung nach einem der Ansprüche 22 bis 27,
dadurch gekennzeichnet,
daß die Heiz-und/oder Kühleinrichtung ( 60, 80, 90,
100, 120; 150, 160, 180, 200 ) vorzugsweise auf 100
bis 190°C regelbar ist.

Vorrichtung nach Anspruch 28,
dadurch gekennzeichnet,
daß zu der Heiz- und/oder Kühleinrichtung eine vorzugsweise an der Unterseite (130) der jeweiligen Platte (20,
10) angeordnete elektrische Heizvorrichtung ( 100, 160 )
gehört.

Vorrichtung nach einem der Ansprüche 22 bis 29,
dadurch gekennzeichnet,
daß jede Platte (20, 10) eine Einlaufzone (L, L') von
etwa 4 bis 6 mm an Länge, einen Einlaufwinkel ($\alpha, \alpha'$)
von etwa 48 bis 72° und einen Lochabstand von 7 bis 15 mm
besitzt.

Vorrichtung nach einem der Ansprüche 22 bis 30,
dadurch gekennzeichnet,
daß die Länge der die runde Durchgangslöcher (12) aufweisenden Nachpreßplatte (10) durchtretenden zylindrischen Kompaktlinge durch entsprechende Betätigung der
unterhalb der Nachpreßplatte angeordneten Schneidvorrichtung einstellbar ist.

Vorrichtung nach einem der Ansprüche 22 bis 31,
dadurch gekennzeichnet,
daß wenigstens die Vorpreßplatte (20) mit einer Verzahnung versehen ist, in die Verzahnungen eingreifen,
die an den Preßrollen (21) vorgesehen sind.

Vorrichtung nach Anspruch 32,
dadurch gekennzeichnet,
daß die Preßrollen-Verzahnungen an kegelförmigen Preßrollen vorgesehen sind.

0152107

Fig. 1

0152107

Fig. 2

Fig. 4

0152107

Fig. 3